# EUROPÄISCHE PATENTSCHRIFT

(11) **EP 1 499 881 B1**
(45) Veröffentlichungstag und Bekanntmachung des Hinweises auf die Patenterteilung: **13.09.2006**
(21) Anmeldenummer: 03780147.9
(22) Anmeldetag: 11.12.2003
(51) Int. Cl.: G01N 27/64

(54) **VERFAHREN ZUR DETEKTION UND KONZENTRATIONSBESTIMMUNG VON SCHWEFELFREIEN ODORIERMITTELN IN ERD- ODER BRENNGAS**
METHOD FOR DETECTING THE PRESENCE AND DETERMINING THE CONCENTRATION OF SULFUR-FREE ODORANTS IN NATURAL OR COMBUSTIBLE GAS
PROCEDE DE DETECTION ET DE DETERMINATION DE LA CONCENTRATION DE SUBSTANCES ODORANTES EXEMPTES DE SOUFRE DANS DES GAZ NATURELS OU COMBUSTIBLES

(30) Priorität: 16.12.2002 DE 10258974
(43) Veröffentlichungstag der Anmeldung: 26.01.2005
(73) Patentinhaber: Axel Semrau GmbH & Co. Kg, 45549 Sprockhövel (DE)
(72) Erfinder: FLACHOWSKY, Johannes, 04349 Leipzig (DE); SEMRAU, Axel, 42311 Wuppertal (DE); BRUCHMANN, Andreas, 44805 Bochum (DE)
(74) Vertreter: Zapf, Christoph
(86) Internationale Anmeldenummer: PCT/EP2003/014042
(87) Internationale Veröffentlichungsnummer: WO 2004/055507

(56) Entgegenhaltungen:
- US-A- 3 935 452
- US-A- 5 968 837
- ROEHL: "microprocessor controlled chemical detection." OPTICAL ENGINEERING, SOC. OF PHOTO-OPTICAL INSTRUMENTATION ENGINEERS. BELLINGHAM, US, Bd. 24, Nr. 6, 1. November 1985 (1985-11-01), Seiten 985-990, XP002086563 ISSN: 0091-3286
- M. KOLEHMAINEN: "monitoring odorous sulfur emisions using self-organizing maps for handling ion mobility spectrometry data" JOURNAL OF THE AIR AND WASTE MANAGEMENT ASSOCIATION, Bd. 51, Nr. 7, 2001, Seiten 966-971, XP008028407

## Beschreibung

Die vorliegende Erfindung betrifft ein Verfahren zur Detektion und Quantifizierung von schwefelfreien Odoriermitteln in Erd- oder Brenngas.

Erdgas weist von Natur aus keinen oder nur einen unspezifischen eigenen Geruch auf. Um die Sicherheit in der Gasverteilung zu erhöhen, wird deshalb dem Erd- oder Brenngas durch Zugabe eines sogenannten Odoriermittels ein typischer Warngeruch verliehen. Die Mindestkonzentration eines derartigen Odoriermittels im Gas wird in Deutschland durch vom Fachverband DVGW festgelegte Regeln oder in anderen Ländern durch entsprechende ähnliche Vorschriften vorgegeben. Hierbei ist ebenfalls vorgeschrieben, dass die Einhaltung einer Mindestkonzentration durch geeignete analytische Messungen überwacht werden muss. Bisher werden bevorzugt schwefelhaltige Odoriermittel verwendet, und für deren Messung sind verschiedene Messtechniken bekannt. Für die Messung schwefelfreier Odoriermittel wird zur Zeit ein Messverfahren auf der Basis der Gaschromatographie verwendete, siehe zum Beispiel M. Bernhart und R. Reimert "Voruntersuchungen an einem schwefelfreien Odoriermittel" in gwf Gas-Erdgas Band 140 (1999), Nr. 2, Seiten 92-96 (ISSN 0016- 4909). Ein derartiges Messverfahren ist aufgrund des damit verbundenen apparativen Aufwandes und der langen Messzeit für den typischen Einsatz für Feldmessungen im Erdgasnetz allerdings nur begrenzt bzw. gar nicht geeignet.

Der vorliegenden Erfindung liegt deshalb die Aufgabe zugrunde, ein Verfahren zur Detektion und Quantifizierung von schwefelfreien Odoriermitteln in Erd- oder Brenngasen zur Verfügung zu stellen, das die Kriterien der Feldmessung unter Anwendung einer analytischen Methode erfüllt.

Erfindungsgemäß wird dies dadurch erreicht, dass ein Messverfahren unter Verwendung der Ionen-Mobilitäts-Spektrometrie verwendet wird, wobei das Erd- oder Brenngas als Messgas eingesetzt wird.

Die Ionen-Mobilitäts-Spektrometrie ist an sich bekannt. Sie wurde erstmals von Cohen und Karasek 1970 unter dem - weil es sich vom Prinzip her um eine Gasphasenelektrophorese handelt - irreführenden Namen Plasmachromatographie beschrieben (Cohen, M.J.; Karasek, F.W.: Plasma Chromatography - A new dimension for gas chromatography and massspectrometry, J. Chrom. Sci., 8, 330, 1970) und insbesondere zum Nachweis phosphororganischer Stoffe eingesetzt.

Weiter ist ein Ionen-Mobiltäts-Spektrometer zur Feststellung von Spuren molekularer Spezien in Gasen zus US-3935452 bekannt.

Bedeutende Vorteile der Ionen-Mobilitäts-Spektrometrie bestehen unter anderem darin, dass die mit diesem Verfahren realisierbaren Messabläufe sehr schnell, das heißt im Millisekundenbereich vor sich gehen, wobei innerhalb einer Minute bis zu 60 Spektren aufgenommen werden können, und dass robuste, gerätetechnisch erprobte Analysegeräte zur Verfügung stehen, die auch in handhaltbarer, energieautarker Form ausgeführt sein können und relativ preiswert sind.

Die Ionen-Mobilitäts-Spektrometrie stellt eine Möglichkeit zur Detektion polarer organischer Substanzen dar, bei der zunächst durch Ionisierung in einem Reaktionsraum, z.B. durch Koronaionisierung oder mittels UV-Licht oder radioaktiver Strahlung, sogenannte Reaktantionen bereitgestellt werden, die wiederum der Ionisierung der zu analysierenden Moleküle dienen. Durch diesen Vorgang entstehen über Normaldruckstoßprozesse zwischen den Reaktantionen und den zu analysierenden Molekülen sogenannte Produktionen, die in einem elektrischen Feld in einem dem Reaktionsraum nachgeordneten Driftraum je nach Ladung, Molekülgröße und sterischer Konfiguration unterschiedlich beschleunigt und an einer Detektorelektrode aufgefangen und registriert werden. Zwischen dem Reaktionsraum und dem Driftraum kann dabei ein Schaltgitter und im Driftraum vor der Detektorelektrode ein Abschirmgitter angeordnet sein. Es wird eine Messung der Flug- oder Driftzeit der Produktionen vorgenommen, wobei aus dem Quotienten aus Ionen-Fluggeschwindigkeit und elektrischer Feldstärke als charakteristische Größe die Ionen-Mobilität bestimmt werden kann, welche - normiert auf standardisierte Druck- und Temperaturbedingungen - eine stoffspezifische Größe darstellt. Somit kann auch eine einer bestimmten Konzentration eines zu analysierenden Stoffes zugeordnete Ladungsmenge zeitaufgelöst bestimmt werden.

Probleme treten bei diesem Messverfahren bekanntermaßen jedoch immer dann auf, wenn neben in großem Überschuß vorhandenen Hauptkomponenten-Konzentrationen Spurenkonzentrationen bestimmt werden sollen, da es - je nach Zusammensetzung der Analysesubstanz - möglich ist, dass durch die bereitgestellten Reaktantionen zuerst oder ausschließlich die Moleküle der auch als Matrix bezeichneten Hauptkomponente und in nicht ausreichendem Maß oder gar nicht die nur in Spuren vorhandenen Moleküle ionisiert werden.

Überraschenderweise wurde jedoch gefunden, dass bei Einsatz des erfindungsgemäßen Verfahrens unter Verwendung der Ionen-Mobilitäts-Spektrometrie in dem durch die einschlägigen Normen festgelegten extrem niedrigen Konzentrationsbereich der schwefelfreien Odoriermittel typische Signalmuster bestimmt werden konnten, bei denen das den Hauptbestandteil der Erdgasmatrix bildende Methan nicht störte sowie auch kein störender Einfluß von Wasserstoff- oder Stickstoffanteilen oder selbst schwefelhaltigen organischen Substanzen auftrat. Letzteres gestattet vorteilhafterweise den Einsatz des erfindungsgemäßen Verfahrens und die Odoriermittel-Detektierung bzw. -Quantifizierung auch dann, wenn - beispielsweise in einem Erd- oder Brenngas unbekannter Zusammensetzung oder Herkunft - weitere oder andere als die primär nachzuweisenden schwefelfreien Odoriermittel, wie Mercaptan oder Tetrahydrothiophen, enthalten sind.

Die Auswertung der Messung der Ionen-Mobilität kann sich auf eine - im Sinne einer Detektierung der An- oder Abwesenheit eines Odoriermittels - nur qualitative oder mit Vorteil auf eine durch Vergleich mit einer Referenzsubstanz relative quantitative Analyse der als sogenannte Plasmagramme erzeugten Signalmuster stützen, wobei z.B. elektrische Signale, wie Spannungs- oder Stromstärkenpeaks, an der Detektorelektrode, über der Driftzeit der Produktionen durch den Driftraum aufgetragen werden. Eine Quantifizierung des Messergebnisses kann erfindungsgemäß bevorzugt dadurch erreicht werden, dass durch vor der eigentlichen Messung zur Konzentrationsbestimmung der Odoriermittel in einem Erd- und/oder Brenngas Vergleichsmessungen mit Kalibriergasen bekannter Zusammensetzung und Konzentration durchgeführt werden und so eine Kalibrierung des Ionen-Mobilitäts-Spektrometers erfolgt. Die Kalibrierkurve ist dabei wegen den Stoßreaktionen der Reaktantionen mit den zu analysierenden Molekülen nichtlinear, insbesondere zweiter Ordnung, umfaßt aber einen quasilinearen Bereich von einer Größenordnung.

Im Sinne einer einfachen Auswertbarkeit der Messergebnisse kann es erfindungsgemäß vorgesehen sein, dass mit den gemessenen spektralen Informationen bzw. Signalen eine derartige Auswertung erfolgt, dass eine direkte Anzeige der gemessenen Konzentration des Odoriermittels in einer üblichen Konzentrationsangabe, wie mg/m³, ppm oder vpm, ausgegeben wird.

Als schwefelfreies Odoriermittel kann vorzugsweise ein Mittel verwendet werden, das als Hauptkomponente ein Ethylacrylat enthält. Ein derartiges Odoriermittel ist beispielsweise als Dreikomponentengemisch unter dem Markennamen "Gasodor™ Sfree™" bekannt. Die Mindestkonzentration eines derartigen Odoriermittels im Erdgas wird mit 8,8 mg/m³ angegeben. Die real verwendeten Odoriermittelkonzentrationen liegen jedoch höher, in einem Bereich von ca. 10 mg/m³ bis 20 mg/m³. Noch höhere Konzentrationen bis hin zu ca. 50 mg/m³ können in einzelnen Fällen z.B. für kurzzeitige, sogenannte Stoßodorierungen möglich sein.

Bei dem erfindungsgemäßen Verfahren ist es mit Vorteil möglich, dass als Reaktantionen während der anfänglichen Ionisierung, z.B. unter der Wirkung ultravioletter oder radioaktiver, insbesondere β-Strahlung, protonierte Wasser-Cluster bereitgestellt werden, die in einer Übertragungsreaktion als Protonendonatoren dienen und dadurch positiv geladene Produktionen bilden. Die Wasser-Cluster werden in einem solchen Fall auch als sogenannte Dopanten bezeichnet. Aus dem Odoriermittel können dabei insbesondere Ionen mit monomerischer oder dimerischer Struktur gebildet werden.

Höhermolekulare Gasbestandteile, die neben Methan in einem Erd- oder Brenngas vorhanden sein können, wie Aromaten oder Cycloalkane, können den Nachweis und die Kalibrierung des Verfahrens beeinträchtigen. Dies ist darauf zurückzuführen, dass bei dem oben erwähnten Vorgang der Bildung von Produktionen über Normaldruckstoßprozesse zwischen den Reaktantionen und den zu analysierenden Molekülen die Matrixüberkonzentration prävalent wird. Die Ausbeute an gebildeten Produktionen - und damit die Nachweisgrenze der Analysesubstanz - wird nämlich im Falle der Bildung positiver Ionen wesentlich durch die Protonenaffinität (oder im umgekehrten Fall der Bildung negativer Ionen durch die Elektronenaffinität) der zu analysierenden Moleküle bestimmt. Hierbei tritt zwischen den unterschiedlichen Gaskomponenten ein sogenannter Verdrängungswettbewerb auf, bei dem neben dem Konzentrationsverhältnis auch eine Protonenaffinitäts-Reihenfolge der Könstituenten des Gases zu beachten ist. Wenn das nachzuweisende Molekül nicht eine - wie dies im Fall einer Kombination Methan-Matrix/Ethylacrylat gegeben ist - ausreichend hohe oder gar eine geringere Elektronegativität im Vergleich zu den Matrixmolekülen aufweist, werden die Reaktantionen verbraucht, ohne dass eine die Nachweisgrenze erreichende Konzentration an Produktionen der Analysensubstanz gebildet wird.

Um trotzdem bei der durchzuführenden Konzentrationsmessung im relevanten Messbereich eine hinreichende Spezifität auf die zu analysierende Substanz, eine hohe Messbereichsdynamik und zusätzlich auch Linearität oder Quasilinearität bei der Bereitstellung der Meßsignale zu erreichen, kann erfindungsgemäß vorgesehen werden, dass in einer dem Reaktionsraum einer Vorrichtung zur Durchführung der lonen-Mobilitäts-Spektrometrie vorgeschalteten Separationseinheit eine Abtrennung oder Abreicherung der störenden Gaskomponenten erfolgt. Störende Kohlenwasserstoffe können zum Beispiel katalytisch selektiv oxidiert oder in sogenannte Fallen aufgenommen werden, so dass sie in der Protonenbildungsreaktion nicht mehr wirksam werden. Sollten Schwefelverbindungen in zu hoher, störender Konzentration im Erdgas bzw. Gasgemisch vorliegen, können diese durch einen chemischen Filter- z.B. schon bei einer Probenahme - herausgefiltert werden.

Zum vorstehend genannten Zweck ist es auch möglich, dass das Messgas vor dem Messvorgang mit einem weiteren Gas vermischt und verdünnt und danach über eine Probenmembran eines entsprechenden Ionen-Mobilitäts-Spektrometers geführt wird. Hierbei kann insbesondere vorgesehen werden, dass ein vorbestimmtes konstantes Verhältnis zwischen dem Messgas und der Umgebungsluft eingestellt wird, wozu vorteilhafterweise insbesondere eine Druckreduzierung und eine Homogenisierung vorgenommen werden kann; wenn Messgase, wie dies oft der Fall ist, mit unterschiedlichen Vordrücken, z.B. in einem Bereich von ca. 20 mbar bis 10 bar, an der Vorrichtung zur Durchführung der Ionen-Mobilitäts-Spektrometrie anliegen.

Schließlich kann auch mit Vorteil eine selektive Ionisierung der schwefelfreien Odoriermittelkomponente(n) vorgesehen sein. Hierbei wird anstelle des Wassers als Dopant ein Protonendonator eingesetzt, mit dem die Matrixkonstituenten des Gases gar nicht oder nur - im Vergleich mit dem Odoriermittel - in sehr geringfügigem Maß in Wechselwirkung treten. Ein solchermaßen wirkender Stoff bzw. ein solchermaßen wirkendes Stoffgemisch kann in einem selektiven, vor einem Driftraum für die Produktionen angeordneten Dopanten-Modul mit höherer Protonierungsaffinität für das Odoriermittel als für die Gashauptkomponenten eingesetzt werden.

Anhand mehrerer durch die Zeichnung veranschaulichter, bevorzugter Ausführungsbeispiele soll im Folgenden die Erfindung näher erläutert werden. Dabei zeigen:
- Fig. 1: eine dreidimensionale diagrammatische Darstellung der Ergebnisse mehrerer aufeinanderfolgender Messungen der Ionen-Mobilität in einer ersten Erdgasprobe,
- Fig. 2: eine diagrammatische Darstellung des Ergebnisses einer Messung der Ionen-Mobilität in einer zweiten, nicht odorierten, Erdgasprobe,
- Fig. 3: eine diagrammatische Darstellung des Ergebnisses einer Messung der Ionen-Mobilität in der zweiten, jedoch odorierten, Erdgasprobe,
- Fig. 4: eine diagrammatische Darstellung des Ergebnisses einer Messung der Ionen-Mobilität in einer mit einem ersten Odoriermittel odorierten Stadtgasprobe,
- Fig. 5: eine diagrammatische Darstellung des Ergebnisses einer Messung der Ionen-Mobilität in einer mit einem ersten und einem zweiten Odoriermittel odorierten Stadtgasprobe.

In den verschiedenen Figuren der Zeichnung sind gleiche Teile stets mit den gleichen Bezugszeichen versehen, so dass sie in der Regel auch jeweils nur einmal beschrieben werden.

Zwei Erdgasproben unterschiedlicher Herkunft und einer Stadtgasprobe wurden aus 1I-Gasmäusen über eine Silikonkautschukmembran einem handhaltbaren Ionen-Mobilitäts-Spektrometer (RAID-1 der Fa. Bruker Saxonia) zugeführt. Als Reaktantionen dienten Wasserclusterionen, die mittels Bestrahlung durch ein Ni ⁶³-Isotop erzeugt wurden.

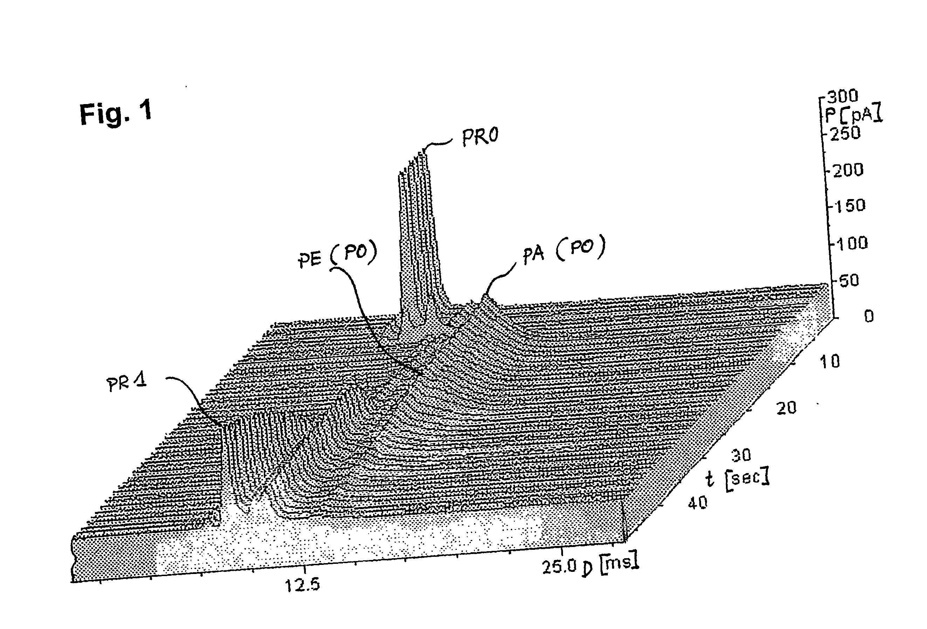

In den Messdiagrammen ist jeweils als Messignal, d.h. als relevante Information über die Ionen in einem Mobilitäts-Spektrum, eine in pA angegebene Peakhöhe P über einer in ms angegebenen Ionen-Driftzeit dargestellt. Fig. 1 enthält zusätzlich eine weitere Zeitachse, die der Messzeit t (in sec), in der in kurzem Abstand aufeinanderfolgend eine Vielzahl von Spektren ermittelt wurde.

Fig. 1 ist zunächst zu entnehmen, dass zu Beginn der Messung ein charakteristischer, relativ hoher Peak PR0 ermittelt werden kann. Dieser Peak PR0 ist, wie sich durch Umrechnung der Driftzeit der Ionen in einen normierten Wert der Ionen-Moblität zeigen läßt, charakteristisch für die Wassercluster-Reaktandionen. Der Peak PR0 verschwindet in dem Moment, in dem die Dosierung eines Odoriermittels beginnt, das in einer Konzentration von 10 mg/Nm³ in der ersten Erdgasprobe vorlag. Bei dem Odoriermittel handelte es sich dabei um eine schwefelfreie Gasmischung, die ein Ethylacrylat enthielt, durch das bei einer gegenüber der Driftzeit D der Reaktandionen erhöhten Driftzeit D ein Peak PA hervorgerufen wird. Dieser Peak PA verringert mit laufender Messzeit t seine Höhe und erreicht bei Ende der Dosierung einen Wert PE. Durch den Klammerausdruck (PO) in der Figur wird dabei zum Ausdruck gebracht, dass es sich sowohl bei dem Peak PA als auch bei dem Peak PE um Peaks ein und desselben Odoriermittels handelt. Danach klingt das Messsignal ab, bis es nahezu gänzlich verschwindet. Es erscheint wieder der charkteristische Peak der Reaktandionen, der in diesem Fall mit PR1 bezeichnet ist.

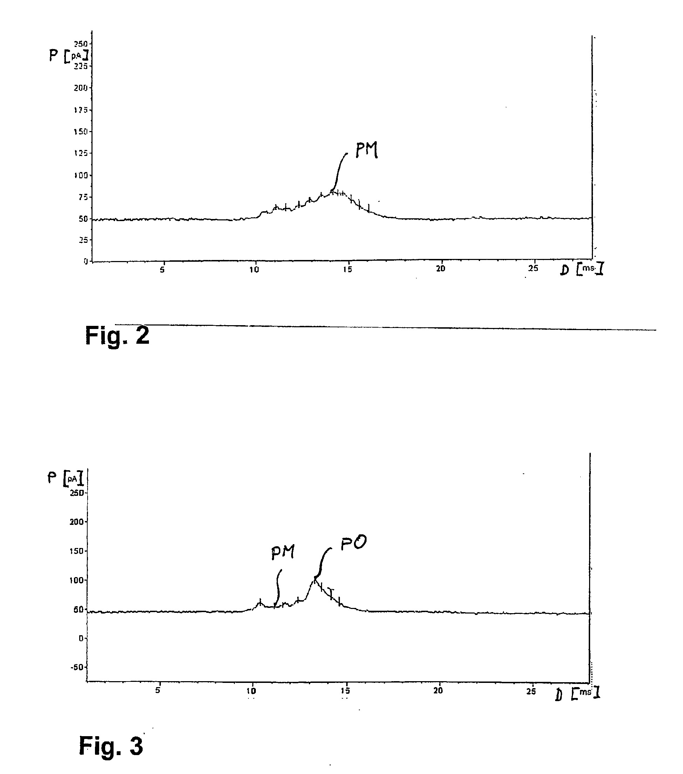

Wie bereits erwähnt, zeigt Fig. 2 eine diagrammatische Darstellung des Ergebnisses einer Messung der Ionen-Mobilität in einer zweiten, nicht odorierten Erdgasprobe. Im Bereich einer Driftzeit D von etwa 10 bis 17 ms ist eine breite, hügelartige Peakausbildung PM zu erkennen, die auf die ionisierten Moleküle der Erdgasmatrix zurückzuführen ist.

Fig. 3 zeigt eine Darstellung des Ergebnisses einer Messung der gleichen Ergasprobe wie in Fig. 2 jedoch mit einem Odoriermittels, bei dem es sich um das gleiche wie in dem ersten Ausführungsbeispiel der Erfindung handelte und das in einer Konzentration von 10 mg/Nm³ in der Probe vorlag. Es ist zu sehen, dass das Odoriermittel eine geringfügige Nivellierung des Matrixsignals PM und das Auftreten eines vergleichsweise schärfer ausgebildeten charakteristischen Peaks PO bei einer Driftzeit hervorruft, die auch beim ersten Ausführungsbeispiel als charakteristisch bestimmt wurde.

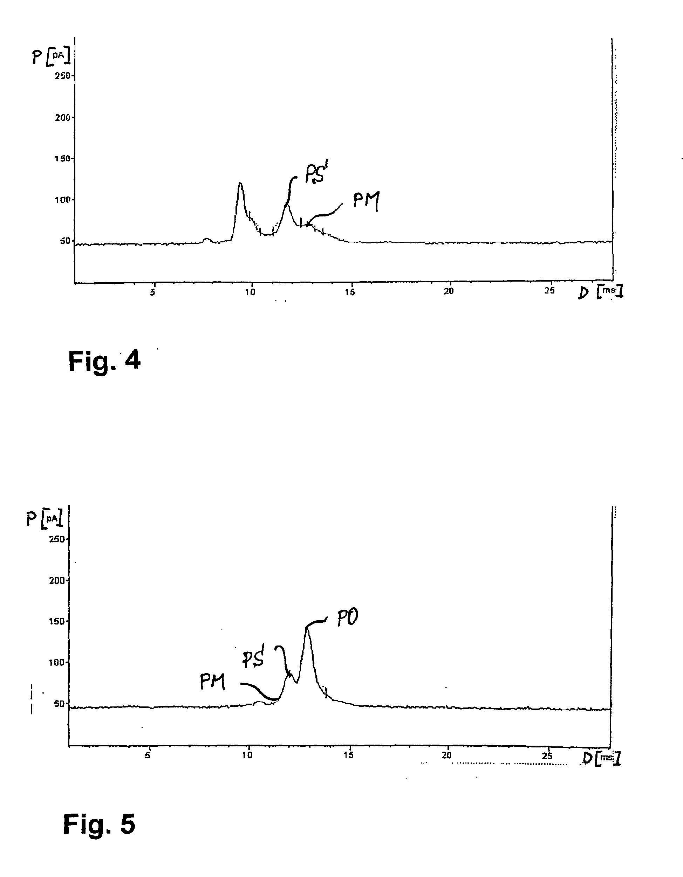

Fig. 4 und 5 veranschaulichen, dass im Erd- oder Brenngas neben der Detektierung und Quantifizierung des schwefelfreien Odoriermittels unter Verwendung der lonen-Mobilitäts-Spektrometrie auch eine Detektierung oder Quantifizierung weiterer Odoriermittel, wie Mercaptan oder Tetrahydrothiophen, möglich ist. Fig. 4 zeigt dabei die spektrale Verteilung der Ionen-Mobilität einer Stadtgasprobe, der als Odoriermittel Tetrahydrothiophen (THT) beigefügt war. Dieses ruft als ein an der Detektorelektrode des Ionen-Mobilitäts-Spektrometers erfaßbares Messsignal einen klar ausgeprägten Odoriermittel-Peak PS hervor. Wie Fig. 5 zeigt, verschwindet dieser Peak PS bei einer zusätzlichen Dotierung des Stadtgases mit einem schwefelfreien Odoriermittel - wiederum in einer Konzentration von 10 mg/Nm³, wiederum ethylacrylathaltig - nicht. Der Peak PS stört jedoch auch nicht die Detektierung und Quantifizierung des schwefelfreien Odoriermittels, dessen Vorhandensein und Quantität anhand des für ihn charakteristischen Peaks PO und seiner Peakhöhe P festgestellt werden kann.

Die vorgenommenen Messungen gestatten es, nach einer vor den Messungen vorgenommenen Kalibrierung aus den gemessenen Informationen (Peakhöhe P, Driftzeit D) im Spektrum der Ionen-Mobilität die interessierenden Messwerte in üblichen Konzentrationeinheiten auszugeben und direkt auf einem Spektrometerdisplay anzuzeigen.

Das erfindungsgemäße Verfahren ist zur mobilen Vorort-Messung ebenso einsetzbar wie für stationäre und automatische stationäre On-Line-Messungen.

Wie bereits aus den vorstehenden Ausführungen hervorgeht, ist die Erfindung nicht auf die vorstehend dargestellten Ausführungsformen beschränkt, sondern umfaßt auch alle im Sinne der Erfindung gleichwirkenden Ausführungen. So ist es beispielsweise möglich, dass je nach ihrer Zusammensetzung, die Analysensubstanz auch unmittelbar ionisiert wird, ohne dass der Rahmen der Erfindung verlassen wird. Ein Einsatz des erfindungsgemäßen Verfahrens ist auch unterhalb der eingangs erwähnten normierten Odoriermittel-Konzentrationswerte, beispielsweise ab ca. 2 mg/m³ sinnvoll.

Durch seine universelle Einsetzbarkeit kann das erfindungsgemäße Verfahren vorteilhafterweise auch zur Untersuchung von Erd- oder Brenngasproben zunächst unbekannter Zusammensetzung oder Herkunft eingesetzt werden.

## Patentansprüche

1. Verfahren zum Detektieren und Quantifizieren von schwefelfreien Odoriermitteln in Erd- oder Brenngas,
**gekennzeichnet durch** die Verwendung der Ionen-Mobilitäts-Spektrometrie als Messverfahren, wobei das Erd- oder Brenngas als Messgas eingesetzt wird.

2. Verfahren nach Anspruch 1,
**dadurch gekennzeichnet, dass** aus gemessenen Informationen eines Spektrums der Ionen-Mobilität des Messgases eine Auswertung des Konzentrationswertes in üblichen Konzentrationsangaben, wie ppm, vpm oder mg/m³, erfolgt.

3. Verfahren nach Anspruch 1 oder 2,
**dadurch gekennzeichnet, dass** das Odoriermittel in einem Konzentrationsbereich von etwa 2 bis 50 mg/m³, insbesondere von etwa 10 bis 20 mg/m³, bestimmt wird.

4. Verfahren nach einem der Ansprüche 1 bis 3,
**dadurch gekennzeichnet , dass** mittels geeigneter Kalibriergase bekannter Zusammensetzung und Konzentration vor der Messung an einer Probe des Messgases eine Kalibrierung eines zum Detektieren und Quantifizieren des Odoriermittels eingesetzten Ionen-Mobilitäts-Spektrometers erfolgt.

5. Verfahren nach einem der Ansprüche 1 bis 4,
**dadurch gekennzeichnet, dass**imErd-oderBrenngasdie Detektierung und Quantifizierung eines schwefelfreien Odoriermittels erfolgt, dessen Moleküle eine signifikant höhere Elektronegativität aufweisen als die anderer Bestandteile des Erd- oder Brenngases, insbesondere die der Hauptbestandteile, wie Methan.

6. Verfahren nach einem der Ansprüche 1 bis 5,
**dadurch gekennzeichnet, dass** im Erd- oder Brenngas die Detektierung und Quantifizierung eines, insbesondere eines in einem als schwefelfreies Odoriermittel zugesetzten Gasgemisches als Komponente enthaltenen, Ethylacrylates erfolgt.

7. Verfahren nach einem der Ansprüche 1 bis 6,
**dadurch gekennzeichnet, dass** im Erd- oder Brenngas neben der Detektierung und Quantifizierung des schwefelfreien Odoriermittels unter Verwendung der Ionen-Mobilitäts-Spektrometrie eine Detektierung oder Quantifizierung weiterer Odoriermittel, wie Mercaptan oder Tetrahydrothiophen, erfolgt.

8. Verfahren nach einem der Ansprüche 1 bis 7,
**dadurch gekennzeichnet, dass** das Messgas vor der Ionen-Mobilitäts-Spektrometrie-Messung mit einem weiteren Gas vermischt und verdünnt wird und danach über eine Probenmembran eines Ionen-Mobilitäts-Spektrometers zum Detektieren und Quantifizieren des Odoriermittels geführt wird.

9. Verfahren nach einem der Ansprüche 1 bis 8,
**dadurch gekennzeichnet, dass** vor der Zufügung des Messgases auf die Probenmembran, insbesondere durch Druckreduzierung und Homogenisierung, ein bestimmtes konstantes Verhältnis zwischen Messgas und Luft als einem weiteren Gas eingestellt wird.

10. Verfahren nach einem der Ansprüche 1 bis 9,
**dadurch gekennzeichnet, dass** in einer, einem dem Detektieren und Quantifizieren des Odoriermittels dienenden Ionen-Mobilitäts-Spektrometer vorgeschalteten Separationseinheit eine Abtrennung oder Abreicherung von störenden Gaskomponenten, wie aromatischen oder zyklischen Kohlenwasserstoffen, erfolgt.

11. Verfahren nach einem der Ansprüche 1 bis 10,
**dadurch gekennzeichnet, dass** aus Molekülen des zu detektierenden und quantifizierenden Odoriermittels über Normaldruckstossprozesse mit Wasserclusterionen durch Protonenübertragung Produktionen gebildet werden, deren Driftzeit in einem elektrischen Feld bestimmt wird.

12. Verfahren nach einem der Ansprüche 1 bis 10,
**dadurch gekennzeichnet , dass** aus Molekülen des zu detektierenden und quantifizierenden Odoriermittels mit selektiv auf das Odoriermittel Protonen übertragenden Reaktantionen Produktionen gebildet werden, deren Driftzeit in einem elektrischen Feld bestimmt wird.

## Claims

1. A method of detecting and quantifying sulphur-free odorants in natural or combustible gas, **characterised by** the use of ion mobility spectrometry as a measuring method, wherein the natural or combustible gas is used as a measuring gas.

2. A method according to claim 1, **characterised in that** the concentration level is evaluated in conventional concentration units, such as ppm, vpm or mg/m³, on the basis of measured data from a spectrum of the ion mobility of the measuring gas.

3. A method according to claim 1 or 2, **characterised in that** the odorant is determined in a concentration range from approximately 2 to 50 mg/m³, especially from approximately 10 to 20 mg/m³.

4. A method according to any one of claims 1 to 3, **characterised in that**, by means of suitable calibration gases of known composition and concentration, an ion mobility spectrometer used for detecting and quantifying the odorant is calibrated before measurement using a sample of the measuring gas.

5. A method according to any one of claims 1 to 4, **characterised in that** a sulphur-free odorant in the natural or combustible gas is detected and quantified, the molecules of the odorant having significantly higher electronegativity than other constituents of the natural or combustible gas, especially the main constituents, such as methane.

6. A method according to any one of claims 1 to 5, **characterised in that** an ethyl acrylate, especially contained as a component of a gas mixture added as a sulphur-free odorant, is detected and quantified in the natural or combustible gas.

7. A method according to any one of claims 1 to 6, **characterised in that** further odorants, such as mercaptan or tetrahydrothiophene, are detected or quantified in the natural or combustible gas through the use of ion mobility spectrometry in addition to the detection and quantification of the sulphur-free odorant.

8. A method according to any one of claims 1 to 7, **characterised in that**, before the ion mobility spectrometry measurement, the measuring gas is mixed and diluted with a further gas and then conducted over a sample membrane of an ion mobility spectrometer for detecting and quantifying the odorants.

9. A method according to any one of claims 1 to 8, **characterised in that**, before the application of the measuring gas to the sample membrane, a specified constant ratio between the measuring gas and air as a further gas is set, especially by pressure reduction and homogenisation.

10. A method according to any one of claims 1 to 9, **characterised in that** interfering gas components, such as aromatic or cyclic hydrocarbons, are removed or depleted in a separation unit connected upstream of an ion mobility spectrometer serving to detect and quantify the odorant.

11. A method according to any one of claims 1 to 10, **characterised in that** product ions, the drift time of which in an electric field is determined, are formed from molecules of the odorant to be detected and quantified by means of normal-pressure collision processes with water cluster ions by proton transfer.

12. A method according to any one of claims 1 to 10, **characterised in that** product ions, the drift time of which in an electric field is determined, are formed from molecules of the odorant to be detected and quantified by reactant ions which selectively transfer protons to the odorant.

## Revendications

1. Procédé de détection et de quantification de substances odorantes exemptes de soufre dans le gaz naturel ou combustible, **caractérisé par** l'utilisation de la spectrométrie de mobilité ionique comme procédé de mesure, où le gaz naturel ou combustible est utilisé comme gaz de mesure.

2. Procédé selon la revendication 1, **caractérisé en ce que** l'on réalise une évaluation de la valeur de concentration par des indications de concentration usuelles, comme ppm, vpm ou mg/m³, à partir des informations mesurées d'un spectre de mobilité ionique du gaz de mesure.

3. Procédé selon la revendication 1 ou 2, **caractérisé en ce que** la substance odorante est déterminée dans une plage de concentrations d'environ 2 à 50 mg/m³, en particulier d'environ 10 à 20 mg/m³.

4. Procédé selon l'une des revendications 1 à 3, **caractérisé en ce que** l'on effectue un calibrage d'un spectromètre de mobilité ionique, mis en oeuvre pour la détection et la quantification de la substance odorante, au moyen de gaz de calibrage adéquats de composition et de concentration connues avant la mesure sur un échantillon de gaz de mesure.

5. Procédé selon l'une des revendications 1 à 4, **caractérisé en ce que** l'on effectue dans le gaz naturel ou combustible la détection et la quantification d'une substance odorante exempte de soufre, dont les molécules présentent une électronégativité nettement supérieure à celle des autres composants du gaz naturel ou combustible, en particulier celle des composants principaux tels que le méthane.

6. Procédé selon l'une des revendications 1 à 5, **caractérisé en ce que** l'on effectue dans le gaz naturel ou combustible la détection et la quantification d'un acrylate d'éthyle contenu, comme composant, dans un mélange gazeux additionné à titre de substance odorante exempte de soufre.

7. Procédé selon l'une des revendications 1 à 6, **caractérisé en ce que** l'on effectue dans le gaz naturel ou combustible, hormis la détection et la quantification d'une substance odorante exempte de soufre, en utilisant la spectrométrie de mobilité ionique, une détection ou quantification d'autres substances odorantes, comme le mercaptane ou le tétrahydrothiophène.

8. Procédé selon l'une des revendications 1 à 7, **caractérisé en ce que** le gaz de mesure est mélangé et dilué avec un autre gaz avant la mesure de spectrométrie de mobilité ionique et est ensuite conduit sur une membrane d'échantillons d'un spectromètre de mobilité ionique pour la détection et la quantification de la substance odorante.

9. Procédé selon l'une des revendications 1 à 8, **caractérisé en ce que** l'on ajuste un rapport constant déterminé entre le gaz de mesure et l'air comme autre gaz avant l'amenée du gaz de mesure sur la membrane d'échantillons, en particulier par réduction de la pression et homogénéisation.

10. Procédé selon l'une des revendications 1 à 9, **caractérisé en ce que**, dans une unité de séparation placée en amont d'un spectromètre de mobilité ionique servant à détecter et à quantifier la substance odorante, on effectue une séparation ou un désenrichissement des composants gazeux gênants, comme les hydrocarbures aromatiques ou cycliques.

11. Procédé selon l'une des revendications 1 à 10, **caractérisé en ce que**, à partir des molécules de substance odorante à détecter et à quantifier, il se forme des ions de produit, dont le temps de dérive dans un champ électrique est déterminé, grâce à des procédés de tir sous pression normale avec des ions de cluster d'eau par transfert de protons.

12. Procédé selon l'une des revendications 1 à 10, **caractérisé en ce que**, à partir des molécules de substance odorante à détecter et à quantifier, il se forme des ions de produit, dont le temps de dérive dans un champ électrique est déterminé, avec des ions de réactifs transférant des protons de manière sélective sur la substance odorante.
